# EUROPÄISCHE PATENTSCHRIFT

(11) **EP 2 825 029 B1**
(45) Veröffentlichungstag und Bekanntmachung des Hinweises auf die Patenterteilung: **12.12.2018**
(21) Anmeldenummer: 13709134.4
(22) Anmeldetag: 14.03.2013
(51) Int. Cl.: A01K 1/12

(54) **MELKSTANDANORDNUNG MIT WENIGSTENS EINEM PLATZTEILER**
MILKING PARLOR ARRANGEMENT WITH AT LEAST A SPACE DIVIDER
INSTALLATION DE TRAITE AVEC AU MOINS UN PORTILLON DE SÉPARATION

(30) Priorität: 14.03.2012 DE 102012102132; 02.11.2012 DE 102012110502
(43) Veröffentlichungstag der Anmeldung: 21.01.2015
(73) Patentinhaber: GEA Farm Technologies GmbH, 59199 Bönen (DE)
(72) Erfinder: KRONE, Otto, 49479 Laggenbeck (DE); HENSEL, Derk, 06917 Jessen (DE); TROSSEHL, Marc, 59368 Werne (DE); HILLE, Dieter, 59302 Oelde (DE); SCHNEIDER, Erich, 59229 Ahlen (DE); HÖNSCHEID, Armin, 59199 Bönen (DE); MADER, Thomas, 33378 Rheda-Wiedenbrück (DE)
(74) Vertreter: Kleine, Hubertus
(86) Internationale Anmeldenummer: PCT/EP2013/055272
(87) Internationale Veröffentlichungsnummer: WO 2013/135833

(56) Entgegenhaltungen:
- EP-A2- 0 657 097
- WO-A1-96/01041
- WO-A1-2008/118068
- US-A- 5 596 945

## Beschreibung

Die Erfindung betrifft einen Platzteiler einer Melkstandanordnung nach dem Oberbegriff des Anspruchs 1. Die Erfindung bezieht sich auch auf eine Melkstandanordnung.

Eine derartige Melkstandanordnung wird zum maschinellen Melken von milchgebenden Tieren verwendet. Milchgebende Tiere sind beispielsweise Kühe, Ziegen, Schafe usw. Die Melkstandanordnung weist Melkstände auf, die durch Platzteiler getrennt sind. Der Melkvorgang kann mittels so genannter Melkroboter automatisiert werden. Es sind z.B. Melkkarusselle im Einsatz.

Unter dem Begriff Melkstandanordnung sind Anordnungen von Melkständen zu verstehen, wobei eine Winkelstellung eines zu melkenden Tieres bzw. eine Winkelstellung einer gedachten Längsachse eines zu melkenden Tieres in einem Melkstand zu einem Referenzpunkt bzw. zu einer Referenzlinie zwischen 0° und 90° betragen kann. Als Referenzpunkt wird beispielsweise eine Grube oder ein durch Personal zugänglicher Bereich (z.B. Arbeitsgang) verwendet, welche der Aufenthaltsort des Melkpersonals ist. Als Referenzlinie wird beispielsweise die Längsseite einer geradlinigen Grube oder eine Tangente einer kreisförmigen Grube verwendet.

Melkstandanordnungen sind z.B. bewegliche und unbewegliche Melkstandanordnungen. Bewegliche Melkstandanordnungen sind z.B. Melkkarusselle als Außenmelker und Innenmelker, beide Arten mit beliebiger Drehrichtung. So genannte Side-By-Side-Melkstände können auch als bewegliche Melkstandanordnungen ausgebildet sein. Weiterhin sind Gruppenmelkstände auch unbeweglich, wie z.B. Fischgrätmelkstände und Tandemmelkstände. Diese Auflistung ist nur beispielhaft und nicht eingrenzend.

EP 1 084 611 B1 beschreibt eine Roboterarmkonstruktion mit einer schwenkbaren Trageinheit für ein Melkzeug. Die Konstruktion ist an einer oder mehreren Schienen entlang einer oder mehrerer Melkboxen bewegbar.

US 5,596,945 A beschreibt eine Anlage zum automatischen Melken von Tieren wie z.B. Kühen und umfasst einen Melkstand mit einem Melkroboter und einen überdeckten Bereich, in dem sich die Tiere frei bewegen können. Die Anlage weist ferner ein System von Einwegportalen, z.B. Türen und Tore, auf, welche sich in nur eine Richtung öffnen, um einen Pfad von dem Melkstand durch den überdeckten Bereich und schließlich zurück zu dem Melkstand festzulegen. Der überdeckte Bereich kann auch neben einer eingeschlossenen Weide sein, welche in eine Vielzahl von umschlossenen Abschnitten aufgeteilt ist, die mit dem überdeckten Bereich und untereinander durch Einwegportale verbunden sind, wobei auf diese Weise ein Pfad festgelegt wird, der von dem Melkstand durch den eingeschlossenen Bereich durch jeden Abschnitt der Weide zurück zu dem überdeckten Bereich und dem Melkstand. Der Melkstand umfasst zwei benachbart angeordnete Melkstände. Der Melkroboter ist zwischen den Melkständen so angeordnet, dass er von einem zum anderen unter das Euter und die Zitzen eines darin befindlichen Tieres verstellbar ist. Dabei wird ein Tier zuerst in einem Melkstand auf der einen Seite und in dem anderen Melkstand auf der anderen Seite gemolken. Zwischen den Melkständen ist zudem ein Mechanismus zum automatischen Reinigen von Euter und Zitzen eines Tieres angeordnet, während ein Tier in dem anderen Melkstand gemolken wird.

EP 0 657 097 A2 beschreibt eine Vorrichtung zum automatischen Melken von Tieren, beispielsweise Kühe, und umfasst eine Melkbox mit Zitzenbechern. Zusätzlich weist die Vorrichtung Erfassungsmittel auf, mit welchen die Position des Tieres, oder zumindest ein Teil des Tieres, relativ zu einem Melkstand festgelegt werden kann. Auf der Grundlage dieser Position wird ein Zitzenbecher unter Verwendung eines Rechners in die Nähe des unteren Endes einer Zitzen verstellt, während weitere Mittel vorhanden sind, mit denen die Zitze in das obere Ende des Zitzenbechers gesaugt wird. Diese Mittel weisen eine Luftpumpe auf, mittels welcher ein relativ starker Saugluftstrom nahe und über der Öffnung eines Zitzenbechers aufgebracht werden kann. An einer Längsseite des Melkstands sind Tore zum Einlass und Auslass vorgesehen. An der anderen Längsseite ist eine Art Seitengitter mit einem Melkroboter mit einer Armeinrichtung mit einem Melkzeug mit den Zitzenbechern angebracht. Die Armeinrichtung ist um eine senkrechte Welle drehbar und in Vertikalrichtung verstellbar. Die Zitzenbecher sind derart angeordnet, dass jeweils zwei hintereinander relativ zueinander in einer Ebene verschwenkbar an Armen angebracht sind. Diese beiden Gruppen aus jeweils zwei Zitzenbecher können ihrerseits in der gemeinsamen Ebene unabhängig voneinander verschwenkt werden. Die Gruppen sind nicht voneinander trennbar.

Die bestehende Automatisierungstechnik ist auf Grund geringen Durchsatzes in gemolkenen Kühen/Tieren pro Stunde nicht oder nur eingeschränkt für Großanlagen geeignet. Die immer weiter steigenden Anforderungen insbesondere nach hohen Durchsatzzahlen und kontinuierlichem Betrieb erfordern bei heutigen Melkrobotern, die komplex und kostenaufwendig sind, eine gemeinsame Nutzung für mehrere Melkplätze. Dies kann sich nachteilig auswirken, u.a. aufgrund hoher Komplexität und damit verbundener hoher Ausfallwahrscheinlichkeit, diskontinuierlicher Betrieb, gesperrte Bereiche für das Personal (Sicherheit im Roboterbereich).

Vor diesem Hintergrund besteht die Aufgabe der Erfindung darin, eine verbesserte Anordnung sowie einen Melkstand bereitzustellen und den möglichen Anlagendurchsatz zu verbessern.

Diese Aufgabe wird durch eine Melkstandanordnung mit den Merkmalen des Anspruchs 1 gelöst.

Eine Melkstandanordnung zum Melken von milchgebenden Tieren, weist mindestens einen Platzteiler auf, welcher an einer Längsseite des Melkstands angeordnet ist und eine Armeinrichtung mit einem Melkzeug aufweist, die aus einer Parkposition in eine Arbeitsposition und zurück verstellbar ist. Die Armeinrichtung ist mit dem Melkzeug in der Parkposition in dem Platzteiler angeordnet, wobei das Melkzeug aus der Parkposition von der Seite her in die Arbeitsposition in dem Melkstand derart verstellbar ist, dass es seitlich zu einem zu melkenden Tier zwischen dessen Vorder- und Hinterbeine in die Arbeitsposition verstellbar ist, und wobei das Melkzeug aus zwei Hälften besteht, wobei jede Hälfte einen spezifischen Satz von mindestens einem Zitzenbecher aufweist. In einer weiteren Ausführung ist mindestens ein Außenroboter vorgesehen, welcher zum Ansetzen des Melkzeugs aus der Parkposition an die Zitzen des Euters eines zu melkende Tieres ausgebildet ist. Weiterhin ist vorgesehen, dass der mindestens eine Außenroboter zwei Basisarme mit jeweils mindestens einer Hand aufweist, wobei sich die Basisarme und die Hände gegenüberstehen, wobei der mindestens eine Außenroboter zum parallelen Ansetzen von mindestens einem Zitzenbecher pro Seite an Zitzen eines Euters des zu melkenden Tieres ausgebildet ist.

Damit ist ein automatisierter Melkvorgang möglich.

Dabei wirkt der eine Basisarm mit seiner Hand auf der linken Seite des zu melkenden Tieres (von hinten gesehen) mit den Zitzenbechern des Melkzeugs, das in dem auf der linken Seite befindlichen Platzteiler angeordnet ist, zusammen, und der andere gegenüberliegende Basisarm wirkt mit seiner Hand auf der rechten Seite des zu melkenden Tieres mit den Zitzenbechern des Melkzeugs, das in dem auf der rechten Seite befindlichen Platzteiler angeordnet ist, zusammen. Durch ein solches paralleles Ansetzen kann ein Ansetzvorgang pro Tier zeitlich erheblich verkürzt werden, wodurch ein größerer Durchsatz ermöglicht werden kann. Unter dem parallelen Ansetzen ist zu verstehen, dass ein Zitzenbecher von der Hand des linken Basisarms seitlich von links an eine linke Zitze des Euters des zu melkenden Tieres herangeführt und angesetzt wird, und wobei gleichzeitig auf der anderen Seite, d.h. parallel dazu, ein Zitzenbecher von der Hand des rechten Basisarms seitlich von rechts an eine rechte Zitze des Euters des zu melkenden Tieres herangeführt und angesetzt wird.

In einer Ausführung ist die Melkstandanordnung ein Melkkarussell. Sie kann insbesondere ein Außenmelkkarussell sein.

Dazu ist vorgesehen, dass die jeweilige mindestens eine Hand mit mindestens einem Greifabschnitt zum Ergreifen jeweils mindestens eines Zitzenbechers jeweils einer Hälfte der Melkzeuge in der Parkposition in einem jeweiligen Platzteiler an einer jeweiligen Längsseite des Melkstands links und rechts von einem zu melkenden Tier ausgebildet ist.

In einer anderen Ausführung ist mindestens eine Hand des mindestens einen Außenroboters mit mindestens einem Positionssensor versehen. Der Positionssensor kann z.B. eine 3D-Kamera sein, welche alle vier Zitzen des Euters des zu melkenden Tiers im Blick hat. So ist es möglich, dass nur mit einer Kamera zwei Roboterarme gesteuert werden können.

Der mindestens eine Außenroboter ermöglicht mit seinen beiden Armen kurze Wege zum Ansetzen der Zitzenbecher. Er kann in einer Ausführung auch gleichzeitig pro Seite zwei Zitzenbecher ergreifen, wobei seine Bewegungsvorgänge auf ein Minimum reduziert werden können.

Bei einer Melkstandanordnung mit nebeneinander angeordneten rechtwinkligen Melkständen, die jeweils parallele Längsseiten aufweisen, wie es z.B. bei einer Side-By-Side-Anordnung der Fall ist, ist der Platzteiler parallel zu einer gedachten Längsachse des zu melkenden Tieres angeordnet. Dabei wird vereinfacht angenommen, dass das zu melkende Tier mit seiner gedachten Längsachse während des Melkvorgangs in einem Idealzustand still steht.

Im Falle einer Melkstandanordnung mit kreisförmig angeordneten Melkständen wie bei einem Melkkarussell sind die Längsseiten der Melkstände nicht parallel. In diesem Fall sind die Längsseiten Abschnitte von Radien eines Kreises des Melkkarussells und schneiden sich in gedachter Verlängerung im Mittelpunkt dieses Kreises bzw. im Drehpunkt des Melkkarussells, wobei sie einen Mittelpunktswinkel bilden. Die gedachte Längsachse des zu melkenden Tiers verläuft im Idealfall auch durch den Drehpunkt und halbiert den Mittelpunktswinkel. Dieser Fall ist im weiteren Verlauf hier mit dem Begriff "annähernd parallel" abgekürzt.

Ein zu melkendes Tier kann in den mit dem Platzteiler versehenen Melkstand eintreten, ohne mit der Armeinrichtung in Berührung zu kommen. Erst wenn das Tier in dem Melkstand steht, wird das Melkzeug von der Seite her in einem Ansetzbereich in die Arbeitsposition unter das Tier verstellt. Dazu kann es notwendig sein, dass der gesamte Platzteiler aus einer Ruheposition heraus beim Tierwechsel in eine ideale Melkposition für das neue Tier verfahren wird, beispielsweise in Längsrichtung des Platzteilers. Der Platzteiler ist in seiner Ausführung so ausgelegt, dass kein zusätzlicher Platzbedarf entsteht. Dadurch ergibt sich der Vorteil, dass die Tiere weiterhin Bauch an Bauch stehen können. Dies hat weitere Vorteile: Zum Einen können auf diese Weise viele Tiere auf kleinstmöglichem Raum gemolken werden, wodurch Kosten für die Melkstandanordnung und auch für das zugehörigen Gebäude niedrig gehalten werden können. Zum Anderen bleiben die Laufwege für Melkpersonal und die Tiere kürzer, d.h. Zeitersparnis.

Mit dem Verstellen der Armeinrichtung mit dem Melkzeug von der Seite her zwischen den Vorderbeinen und Hinterbeinen unter das Euter des Tieres wird das Melkzeug außerhalb des Bereiches zwischen den Hinterbeinen verfahren. Im Bereich zwischen den Hinterbeinen besteht eine stark erhöhte Verschmutzungsgefahr durch Tierexkremente. Dieser Bereich wird nun vermieden, was eine Verschmutzung des Melkzeugs und der Armeinrichtung erheblich verringert. Dadurch werden auch Reinigungszeiten und somit Kosten eingespart.

Ein weiterer Vorteil dieser kompakten Bauweise liegt darin, dass eine Nachrüstung des Platzteilers in bestehende Anlagen möglich ist, ohne Melkstände/Melkplätze zu verlieren.

Personal kann jederzeit und ohne durch Vorrichtungen, d.h. die Tragarmeinrichtung und Zubehör, behindert zu sein in den Melkvorgang eingreifen und hat leichten Zugriff. Zusätzliche Schutzvorrichtungen sind nicht erforderlich. Wenn die Melkstandanordnung ein Melkkarussell ist, kann dieses ohne Unterbrechung seine Drehung beibehalten, da das Melkpersonal z.B. von außen an bestimmten Stellen eingreifen kann. Eine Gefährdung des Melkpersonals wird erheblich reduziert.

In einer Ausführung hält die Armeinrichtung das Melkzeug in der Parkposition in dem Platzteiler. Dabei kann die Armeinrichtung einen Oberarm und einen damit gekoppelten Unterarm aufweisen, wobei der Oberarm als Halter ausgebildet ist und der Unterarm einen Melkzeugträger bildet. Der Melkzeugträger kann zwei Zitzenbecher oder auch zwei Zitzenbecher auf jeder Seite halten. Das Halten der Zitzenbecher ist für ein automatisches Ergreifen, z.B. durch einen Außenroboter vorteilhaft.

In einer weiteren Ausführung ist die Armeinrichtung mit dem Melkzeug in der Parkposition in dem Platzteiler in Öffnungen einer Verkleidung des Platzteilers angeordnet. Das Melkzeug ist somit in der Parkposition vor äußeren Einwirkungen geschützt, z.B. durch Tritte eines zu melkenden Tieres.

Außerdem können die Öffnungen der Verkleidung des Platzteilers mit der darin in der Parkposition angeordneten Armeinrichtung mit dem Melkzeug mit einer Schutzabdeckung verschließbar sein, wodurch eine noch höhere Schutzwirkung erreicht wird.

In dem Platzteiler ist vorteilhafterweise eine Reinigungseinrichtung für das Melkzeug angeordnet. Damit ist nach jedem Melkvorgang nicht nur ein Reinigen sondern auch ein Desinfizieren der Zitzenbecher möglich.

In noch einer weiteren Ausführung ist die Armeinrichtung mit einem Vertikalantrieb verbunden, welcher am Platzteiler angeordnet ist und zur vertikalen Verstellung des Melkzeugs für Reinigungsvorgänge in Zusammenwirkung mit der Reinigungseinrichtung vorgesehen ist. Dadurch kann eine Reinigungswirkung der Zitzenbecher noch verstärkt werden.

Zudem kann der Platzteiler mit seinen Komponenten in einer anderen Ausführung eine vormontierte komplette Einheit bilden, was zu Zeiteinsparungen in der Montage führen kann.

Weitere Vorteile und Einzelheiten gehen aus dem in den Figuren der Zeichnung dargestellten Ausführungsbeispiel hervor. Hierbei zeigen:
- Figur 1: eine schematische Draufsicht auf ein erstes Ausführungsbeispiel einer erfindungsgemäßen Melkstandanordnung;
- Figur 2: eine schematische Draufsicht eines zweiten Ausführungsbeispiels der erfindungsgemäßen Melkstandanordnung;
- Figur 3: eine schematische Draufsicht eines dritten Ausführungsbeispiels der erfindungsgemäßen Melkstandanordnung;
- Figur 4: eine schematische Draufsicht einer Variante des zweiten Ausführungsbeispiels nach Figur 2-2a;
- Figur 5: eine Seitenansicht des erfindungsgemäßen Platzteilers;
- Figur 6 und 7: der erfindungsgemäße Platzteiler mit der Armeinrichtung in Parkposition in Draufsicht und Unteransicht;
- Figur 8: eine schematische Draufsicht auf eine Variante des ersten Ausführungsbeispiels nach Figur 1;
- Figur 9: eine vergrößerte Teildraufsicht auf die Variante des ersten Ausführungsbeispiels nach Figur 8; und
- Figur 10: ein vergrößerter Ausschnitt der Variante nach Figur 9.

In den Figuren sind gleiche bzw. ähnliche Funktionselemente mit gleichen Bezugszeichen versehen. In einigen Figuren ist eine Vertikalrichtung z angegeben.

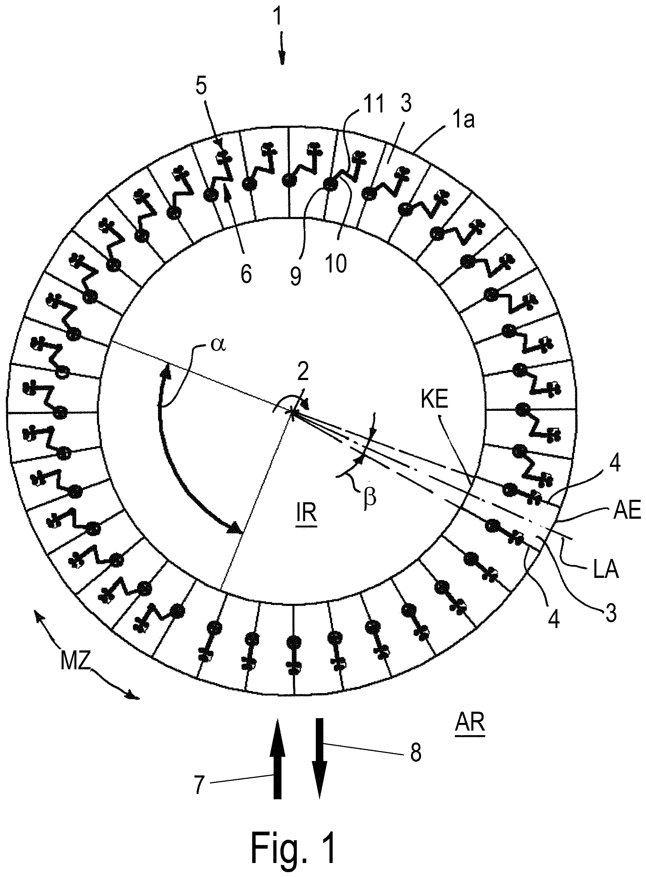

Figur 1 zeigt eine schematische Draufsicht auf ein erstes Ausführungsbeispiel einer erfindungsgemäßen Melkstandanordnung 1 mit erfindungsgemäßen Platzteilern 4.

Die Melkstandanordnung 1 ist nach Art eines so genannten Außenmelker-Karussells mit einer ringförmigen Melkplattform 1a aufgebaut. Dabei stehen die zu melkenden Tiere mit ihrem Kopf zu einer Mitte, d.h. einem Drehpunkt 2, der sich in einem Innenraum IE der Melkstandanordnung 1 befindet, hin ausgerichtet. Das Karussell ist hier um den Drehpunkt 2 im Uhrzeigersinn drehbar. Natürlich kann das Karussell auch in einer anderen Ausführung gegen den Uhrzeigersinn drehbar sein. In diesem Beispiel sind sechsunddreißig Melkstände 3 am Umfang des Karussells angeordnet und durch Platzteiler 4 getrennt.

Jeder Melkstand 3 ist in diesem Karussell ein Kreisabschnitt mit einem Mittelpunktswinkel β zwischen zwei gedachten Verlängerungen der Längsachsen der den Melkstand seitlich begrenzenden Platzteiler 4 und weist eine Längsachse LA auf, welche die Winkelhalbierende des Mittelpunktswinkels β ist. Jeder Melkstand 3 weist hier ein Innenende IE, das auch als Kopfende bezeichnet wird, und ein Außenende AE auf, das zu einem Außenraum AR der Melkstandanordnung 1 weist.

Die Platzteiler 4 sind annähernd parallel zu einer gedachten Längsachse eines zu melkenden Tieres ausgerichtet, welches auf einem Melkstand 3 steht, wobei angenommen wird, dass die gedachte Längsachse des zu melkenden und ruhig stehenden Tieres in Richtung der Längsachse des Melkstands 3 verläuft. Die Melkstandanordnung 1 wird zum maschinellen Melken von milchgebenden Tieren, z.B. Kühe, mittels Melkzeugen 5 verwendet. Für jeden Melkstand 3 ist jeweils mindestens ein Melkzeug 5 vorgesehen, welches über eine Armeinrichtung 6, z.B. mit einem Oberarm 10 und einem Unterarm 11, aus einer Parkposition in eine Arbeitsposition unter das Euter eines zu melkenden Tieres, z.B. einer Kuh, in jedem Melkstand 3 verstellbar ist. Jedes Melkzeug 5 ist mit der Armeinrichtung 6 in der Parkposition innerhalb eines Platzteilers 4 angeordnet.

Das Karussell kann von den Tieren über einen Zugang 7 betreten und über einen Ausgang 8 wieder verlassen werden. Auf/An dem Innenende IE jedes Melkstands 3 zwischen den jeweiligen Enden der Platzteiler 4 ist eine Steuerschrankeinheit 12 angeordnet, welche den jeweiligen Melkstand 3 zum Innenraum IR hin für ein zu melkendes Tier begrenzt, so dass dieses nicht in den Innenraum IR gelangen kann. Die Schaltschrankeinheit 12 wird unten noch eingehend beschrieben.

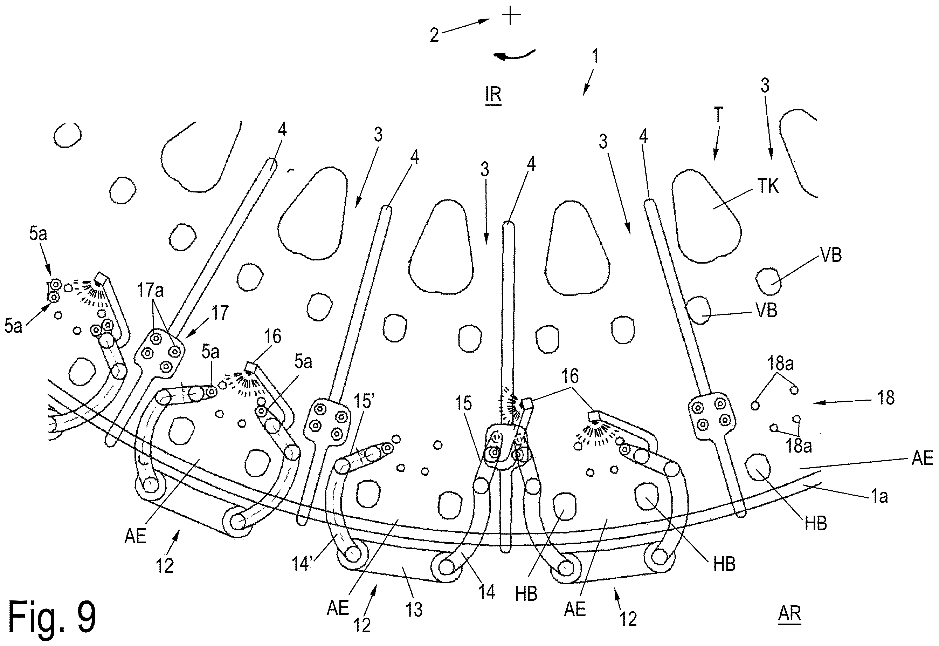

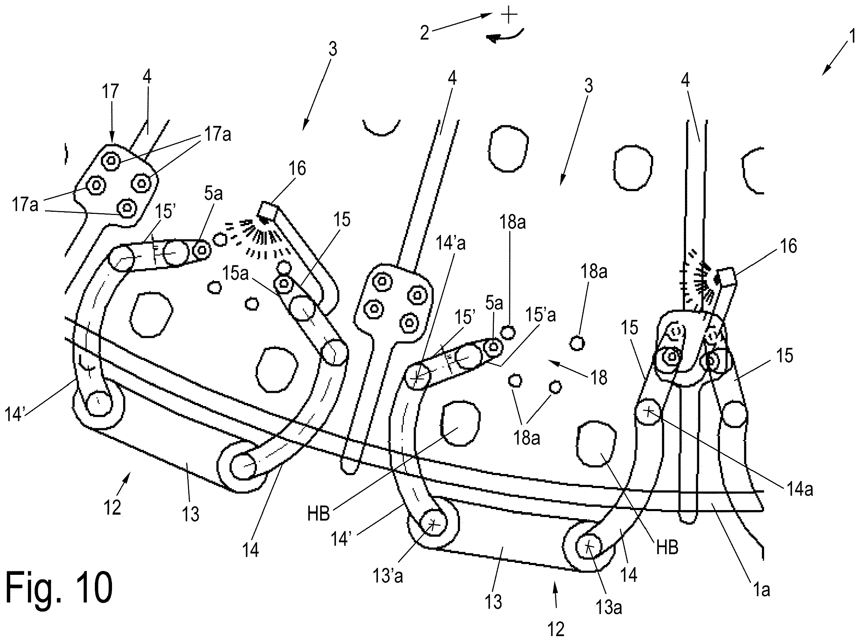

Nachdem ein Tier einen Melkstand 3 betreten hat, ist es wichtig, dass das Tier eine vordefinierte Position einnimmt. Dies wird erreicht, indem die Platzteiler 4 zusammen der jeweiligen Steuerschrankeinheit 12 einen eingegrenzten Melkstand 3 bilden. Wenn das Tier in dem Melkstand 3 steht, wird bevorzugt innerhalb eines Kreisabschnitts, der hier als Ansetzbereich α bezeichnet ist, das Melkzeug 5 aus der Parkposition in dem Platzteiler 4 in die Arbeitsposition von der Seite des Tieres zwischen seinen Vorderbeinen und Hinterbeinen unter den Euter des Tieres verstellt und an diesen mit Hilfe eines Positionssensors 16 (siehe Figur 9, 10) angesetzt. Ein Ansetzen kann aber prinzipiell an jeder Position des Karussells erfolgen, z.B. wenn ein Melkzeug wieder abgefallen ist. In dem ersten Ausführungsbeispiel der Platzteiler 4 ist an jedem Platzteiler 4 eine Antriebseinheit 9 angeordnet, welche mit der Armeinrichtung 6 in Verbindung steht. Nach abgeschlossenem Melkvorgang wird das Melkzeug 5 von dem zu melkenden Tier mittels Armeinrichtung 6 und Antriebseinheit 9 wieder abgenommen oder fällt von selbst in eine Warteposition bzw. Melkendeposition und wird danach in die Parkposition verstellt.

Alle Melkstände 3 sind am Außenumfang der Melkstandanordnung 1 von einem Melker in einem Melkerzugriff MZ in einem Außenraum AR frei zugänglich, so dass er jederzeit bei einem Melkvorgang eingreifen kann. Dieser Arbeitsbereich ist daher von zusätzlichen Vorrichtungen freigehalten. Eine Gefährdung des Melkers ist minimiert. Das Melkkarussell kann ständig in Drehbewegung verbleiben, selbst der Innenraum IR einer/eines solchen Melkanordnung/Melksystems ist für eine Überwachungsperson jederzeit ohne Gefahr für diese Person zugänglich.

Das Melkzeug 5 wird seitlich an das zu melkenden Tier in dem Melkstand 3 heranbewegt und von der Seite des Tieres unter dessen Euter positioniert.

Die Armeinrichtung 6 weist einen Oberarm 10 und einen Unterarm 11 auf und hat die Funktion, das Melkzeug 5 gewichtsneutral zu tragen und so leichtgängig zu sein, dass sie den Bewegungen des zu melkenden Tieres folgt.

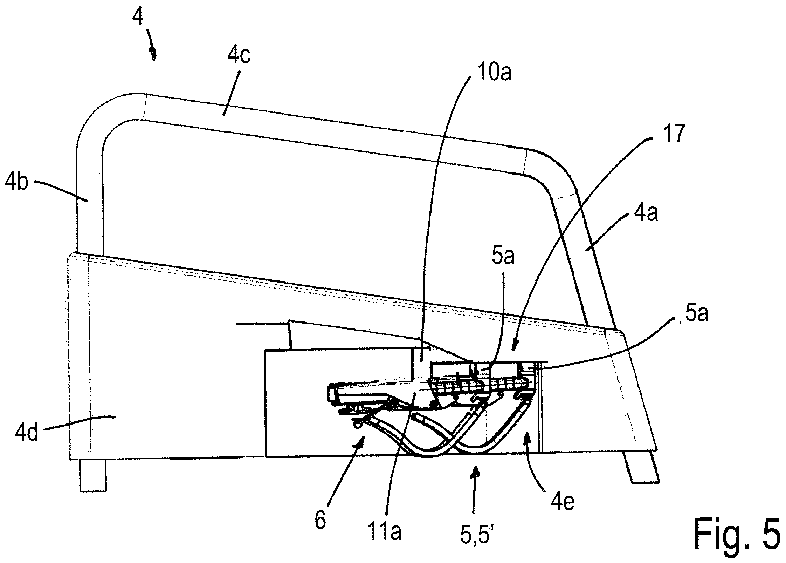

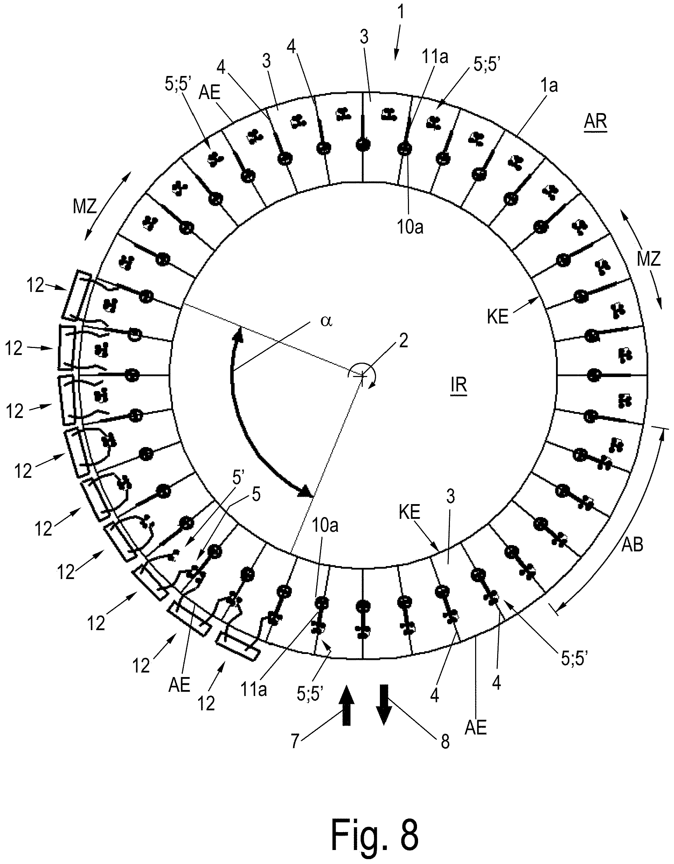

Die Armeinrichtung 6 kann in verschiedenen Variationen ausgeführt sein. Im Zusammenhang mit Figur 5 und 8 ist eine mögliche Ausführung unten erläutert.

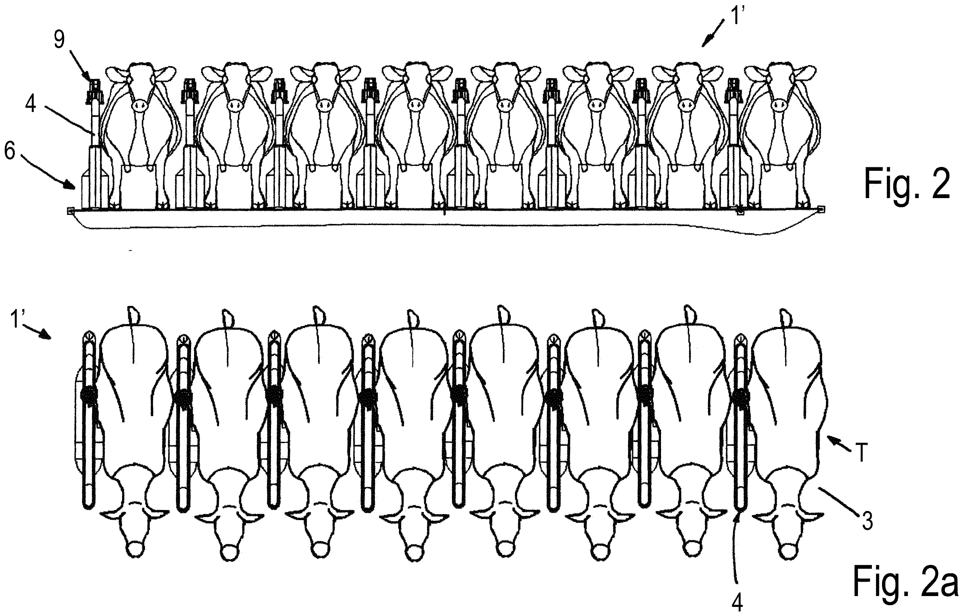

In Figur 2 und 2a sind schematische Ansichten eines zweiten Ausführungsbeispiels der erfindungsgemäßen Melkstandanordnung 1' mit den erfindungsgemäßen Platzteilern 4 dargestellt. Figur 2 zeigt eine Vorderansicht und Figur 2a stellt eine Draufsicht dar. Hier sind die Melkstände 3 nebeneinander angeordnet und auch durch Platzteiler 4 getrennt. In den Melkständen 3 befinden sich zu melkende Tiere T, welche hier Kühe sind. Auf jedem Platzteiler 4 ist eine Antriebseinheit 9 für jeweils eine Armeinrichtung 6 mit dem Melkzeug 5 angeordnet.

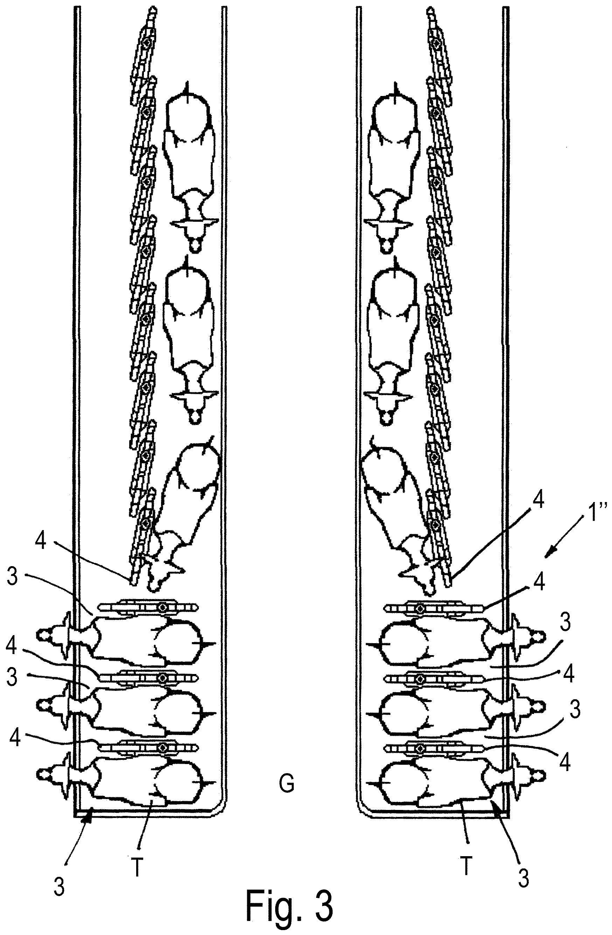

Figur 3 zeigt eine schematische Draufsicht eines dritten Ausführungsbeispiels der erfindungsgemäßen Melkstandanordnung 1" mit den Platzteilern 4 und den Steuerschrankeinheiten. In diesem dritten Ausführungsbeispiel sind die Platzteiler 4 in einem U-förmigen Laufgang verschwenkbar angeordnet, wobei sie zunächst einen Gang bilden, indem sie in einer Linie verschwenkt sind und die Tiere T leiten. Sobald das erste Tier am Ende des U-förmigen Laufgangs angekommen ist, verschwenkt der erste links in der Figur 3 stehende Platzteiler so gegen den Uhrzeigersinn, dass ein Melkstand 3 gebildet wird. Das Verschwenken kann entweder gesteuert über einen Drehaktuator oder automatisch durch die Bewegung des Tieres T erfolgen. Diese Vorgänge laufen ab, bis alle Tiere in der Melkstandanordnung 1" platziert sind. Auch hier ist auf jedem Platzteiler 4 eine Antriebseinheit 9 für jeweils eine Armeinrichtung 6 mit dem Melkzeug 5 angeordnet.

Es sind hier zwei U-förmige Laufgänge spiegelbildlich angeordnet, welche durch eine so genannte Grube G getrennt sind. Die Grube G ist der Aufenthaltsbereich eines Melkers, der von hier beidseitig das Melkgeschehen überwachen und helfend eingreifen kann, ohne durch die Bewegung der Armeinrichtungen 6 behindert zu werden.

In diesem Ausführungsbeispiel sind die Platzteiler 4 parallel zueinander und zu einer gedachten Längsachse eines ruhig stehenden Tieres T.

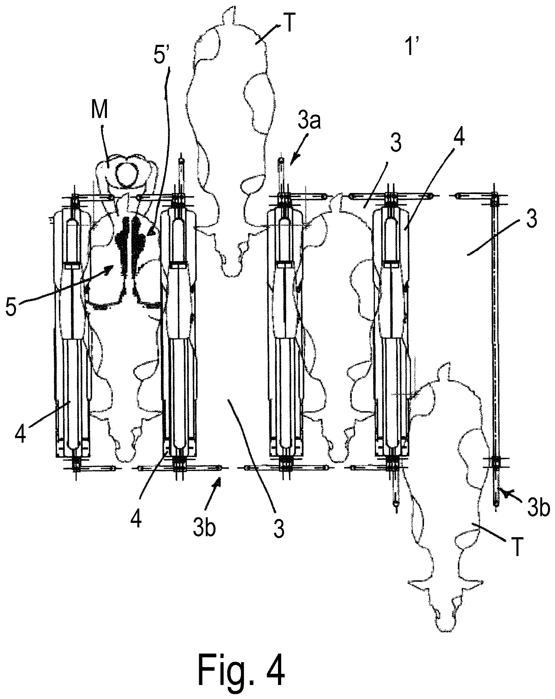

Figur 4 zeigt eine schematische Draufsicht einer Variante des zweiten Ausführungsbeispiels nach Figur 2-2a. Diese Variante wird auch als Durchtreiber-Melkstandanordnung 1' bezeichnet. Die Melkstände 3 sind durch die Platzteiler 4 seitlich getrennt. An den schmalen Rückseiten und Vorderseiten der Melkstände 3 sind jeweils Tore 3a, 3b angeordnet, wobei die Tore 3a an den Rückseiten geöffnet sind, um einen Einlass für ein Tier T in den Melkstand 3 zu bilden (zweiter Melkstand 3 von links in Figur 27). Das Tier T kann an der Vorderseite nicht heraustreten, da diese durch die Tore 3b verschlossen sind. Befindet sich ein Tier T vollständig im Melkstand 3, so werden die Tore 3a der Rückseite verschlossen (Erster und dritter Melkstand 3 von links in Figur 28). Ist der Melkvorgang beendet, öffnen sich die Tore 3b der Vorderseite, und die Tiere T können den Melkstand 3 wieder verlassen, wie bei dem vierten Melkstand 3 von links in der Figur 28 dargestellt ist.

Bei geschlossenem Melkstand 3 mit einem darin befindlichen Tier kann der Melker M das Melkzeug 5, 5' ansetzen bzw. automatisch angesetztes Melkzeug 5, 5' prüfen und ggf. abgefallenes Melkzeug 5, 5' wieder ansetzen. Das Melkzeug 5, 5' ist in dieser Ausführung zweigeteilt, wobei eine Hälfte des Melkzeugs 5 in dem einen linken Platzteiler 4 aufgenommen wird und die andere Hälfte des Melkzeugs 5' in dem einen rechten Platzteiler 4 aufgenommen wird. Dies wird im Folgenden noch weiter beschrieben.

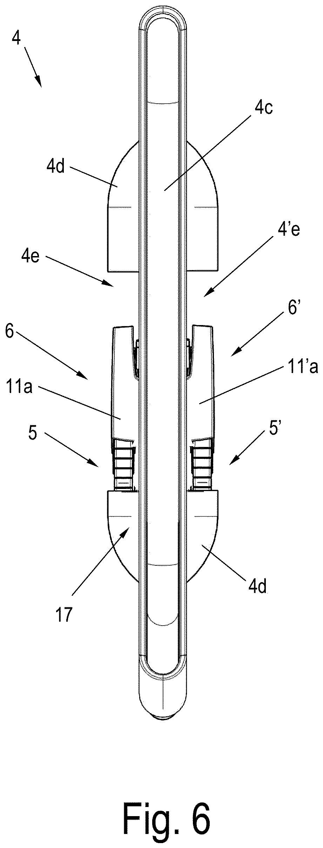

Figur 5 stellt eine Seitenansicht des erfindungsgemäßen Platzteilers 4 mit der Armeinrichtung 6 und dem Melkzeug 5, 5' in der Parkposition dar. Figur 6 stellt den erfindungsgemäßen Platzteiler mit der Armeinrichtung 6 in Parkposition in Draufsicht dar, und Figur zeigt ihn in einer Ansicht von unten ohne Melkzeug 5, 5' und Armeinrichtung 6.

Der Platzteiler 4 ist hier als ein Gehäuse ausgebildet, in welchem die Armeinrichtung 6 und das Melkzeug 5, 5', sowie angeordnet sind. Der Platzteiler 4 ist so eine komplette Einheit, die an gegebener Stelle vormontierbar und komplett austauschbar oder nachrüstbar ist.

Der Platzteiler 4 ist hier als eine Rohrkonstruktion mit einem vorderen Pfosten 4a, der leicht geneigt ist, und einem hinteren Pfosten 4b ausgestaltet. Die Pfosten 4a, 4b sind über eine horizontal verlaufende Horizontalstange 4c verbunden. Etwa ab halber Höhe sind die Pfosten 4a, 4b von einer Verkleidung 4d umhüllt, die sich etwa bis zu den Füßen der Pfosten 4a, 4b erstreckt. Die Pfosten 4a, 4b und die Horizontalstange 4c können auch einstückig aus gebogenem Rohr hergestellt sein. In der Verkleidung 4d ist in der vorderen Hälfte auf beiden Seiten eine Öffnung 4e eingebracht, wodurch sich eine Aufnahme innerhalb des Platzteilers 4 in der Verkleidung 4d ergibt, die auch zu den Seiten hin so ausgebaucht sein kann, dass sie das in ihr geparkte Melkzeug 5, 5' aufnimmt und umgibt. Auf der Seite der Öffnung 4e kann eine zusätzliche, nicht gezeigte Schutzabdeckung zum Schutz des Melkzeugs 5, 5' angebracht sein. Diese Schutzabdeckung kann bei Aktivierung des Melkzeugs 5, 5' z.B. in Richtung des Platzteilers 4 verschoben werden, um die Öffnung 4e freizugeben. In einer weiteren Ausführung kann die Schutzabdeckung auch am Melkzeug 5, 5' angebracht sein. So verbleibt die Schutzabdeckung fest am Melkzeug 5, 5' und verfährt auch mit diesem. Sie kann auch in der Arbeitsposition verkleinert werden, z.B. durch automatisches Zusammenklappen oder -schieben.

Das Melkzeug 5, 5' besteht aus zwei Hälften zu je zwei Zitzenbechern 5a und ist an dem Unterarm 11 der Armeinrichtung 6, welcher hier als Melkzeugträger 11a ausgebildet ist, angebracht. Jedes der Melkzeuge 5, 5' weist in diesem Ausführungsbeispiel zwei Zitzenbecher 5a auf. Jeder der vier Zitzenbecher 5a kann unabhängig von den anderen eine unterschiedliche Stellung einnehmen und automatisch fixiert oder frei beweglich geschaltet werden. Somit können die Zitzenbecher 5a im angesetzten Zustand individuelle Positionen einnehmen, da die Zitzenbecher 5a einzeln angesetzt werden. Außerdem ist eine nicht dargestellte individuelle Zitzenbechervorpositionierung denkbar, mit der dann mehrere Zitzenbecher gleichzeitig ansetzbar sind.

Der Melkzeugträger 11a ist an einem Halter 10a in dem Platzteiler 4 gehalten. Der Melkzeugträger 11a und der Halter 10a sind nicht näher dargestellt.

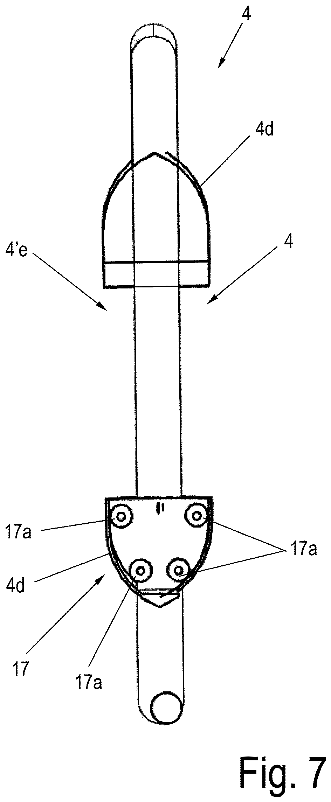

In Figur 6 ist zu erkennen, dass auf jeder Seite des Platzteilers 4 eine Aufnahme 4e, 4'e für eine Armeinrichtung 6, 6' mit einem Melkzeugträger 11, 11'a ausgebildet ist. Die Melkzeugträger 6, 6' können auch als ein gesamtes Teil ausgeführt sein. Unterhalb der Verkleidung 4d ist eine Reinigungseinrichtung 17 angebracht, welche in Figur 7 mit vier Reinigungsdüsen für die vier Zitzenbecher 5a der beiden halben Melkzeuge 5, 5' vorgesehen ist.

In der Parkposition des Melkzeugs 5 und der Armeinrichtung 6 innerhalb der Verkleidung 4d des Platzteilers 4 steht das Melkzeug 5 unter der Reinigungseinrichtung 17 und ist mit ihr Kontakt.

In Figur 7 ist in einer Unteransicht des Platzteilers 4 die Reinigungseinrichtung 17 mit Reinigungsdüsen 17a dargestellt. Wenn das Melkzeug 5 die Parkposition einnimmt, ist diese Position gleichzeitig eine so genannte Clean(ing)-in-Place- (CIP-) Position. Der Melkzeugträger 11a, 11'a kann durch einen nicht gezeigten Vertikalantrieb über den Halter 10a der Armeinrichtung 6, 6' mit dem Melkzeug 5, 5' in Vertikalrichtung nach oben und auch wieder zurück verstellt werden, bis die Reinigungsdüsen 17a jeweils mit einem Zitzenbecher 5a des Melkzeugs 5 zusammenwirken, um diese mit einer Reinigungsflüssigkeit zu reinigen. Die Reinigungsdüsen 17 a können auch mit Luft beschickt werden, um eine Trocknung der Zitzenbecher nach Reinigung zu bewirken. Es ist auch möglich, dass der Vertikalantrieb das Melkzeug 5, 5' und somit die Zitzenbecher 5a in Vertikalrichtung um ein bestimmtes Maß auf und ab bewegt, wobei die Reinigungsdüsen 17a innerhalb der Zitzenbecher 5a z.B. reinigen können. Die Reinigungsdüsen 17a können dazu entsprechend ausgebildet sein, z.B. als Kegelstrahldüsen oder/und Radialstrahldüsen. Zusätzlich zu den Reinigungsdüsen 17a können in besonderer Ausgestaltung außerdem hier nicht dargestellte Außenreinigungsdüsen die Zitzenbecher 5a außen reinigen. Zusätzlich kann auch eine Desinfektion erfolgen.

In Figur 8 ist eine schematische Draufsicht auf eine Variante des ersten Ausführungsbeispiels nach Figur 1 dargestellt.

Im Unterschied zum ersten Ausführungsbeispiel nach Figur 1 sind hier im Außenraum AR innerhalb des Ansetzbereichs α so genannte Außenroboter 12 angeordnet, welche den Ansetzvorgang der Zitzenbecher 5a der Melkzeuge 5, 5' innerhalb des Ansetzbereichs α vornehmen. Es kann z.B. nur ein Außenroboter 12 vorhanden sein, welcher zu Beginn des Ansetzbereichs α an das Außenende AE eines Melkstands 3 der Melkplattform 1a heranbewegt wird und dann die in den Platzteilern 4 geparkten Zitzenbecher 5a der Melkzeuge 5, 5' ergreift und an die Zitzen des Euters eines zu melkenden Tieres ansetzt. Sobald dieser Vorgang durchgeführt ist, wird der Ansetzvorgang beim nächsten Tier ausgeführt. Hier sind mehrere Außenroboter 12 gezeigt, die diese Vorgänge gleichzeitig durchführen können, wobei die Durchsatzgeschwindigkeit erhöht ist.

Die Außenroboter 12 können auch in einem Abnahmebereich AB zum Abnehmen der angesetzten Zitzenbecher 5a der Melkzeuge 5, 5' und Verstellen derselben in die Parkpositionen in den Platzteilern 4 angeordnet sein. Es ist auch möglich, dass sie an nicht gezeigten Schienen dorthin verfahren werden können. Die Außenroboter 12 können auch in einer anderen Ausführung im gesamten Außenraum AR am Außenrand der Melkplattform 1a verfahren werden.

Figur 9 zeigt dazu eine vergrößerte Teildraufsicht auf die Variante des ersten Ausführungsbeispiels nach Figur 8. In Figur 10 ist ein vergrößerter Ausschnitt der Variante nach Figur 9 gezeigt.

In den Figuren 9 und 10 sind die zu melkenden Tiere T nur durch ihre Vorderbeine VB, Hinterbeine HB und Tierköpfe TK schematisch angedeutet.

Der Außenroboter 12 weist eine Roboterbasis 13, zwei Basisarme 14, 14' und zwei Hände 15, 15' mit Greifabschnitten 15a, 15'a auf. Die Basisarme 14, 14' sind gebogen, wobei ihre Wölbung nach außen weist, und spiegelbildlich angeordnet. Ein Ende eines jeden Basisarms 14, 14' ist in einem Basisgelenk 13a, 13'a an der Roboterbasis 13 um eine vertikale Schwenkachse verschwenkbar angebracht. Die Hände 15, 15' sind als kurze, gerade Arme jeweils mit einem Ende in Handgelenken 14a, 14'a an den freien Enden der Basisarme 14, 14' jeweils um eine vertikale Schwenkachse verschwenkbar befestigt. Die freien Enden der Hände 15, 15' sind mit Greifabschnitten 15a, 15'a versehen, welche dazu ausgebildet sind, die Zitzenbecher 5a, 5'a der Melkzeuge 5, 5' in der Parkposition im jeweiligen Platzteiler 4 zu ergreifen, an Zitzen 18a des Euters 18 des zu melkenden Tiers T anzusetzen, wieder abzunehmen und in die Parkposition im jeweiligen Platzteiler 4 zurückzupositionieren.

Jeder Außenroboter 12 ist mit seinen Armen 14, 14' und Händen 15, 15' in Art eines humanoiden Roboters im Karussell hinter den zu melkenden Tieren T an den Außenenden AE der Melkstände 3 angeordnet.

An einer der beiden Hände 15, 15', hier an der rechten Hand 15 ist ein Positionssensor 16 mit einer 3D-Kamera angeordnet, welche beim Ansetzen den gesamten Euter 18 mit den Zitzen 18a im Visier hat. Auf diese Weise ist es möglich, dass mit nur einer Kamera die beiden Basisarme 14, 14' und Hände 15, 15' des Außenroboters 12 bedienbar bzw. steuerbar sind.

So können beide Basisarme 14, 14' mit den Händen 15, 15' die Zitzenbecher 5a der Melkzeuge 5, 5' parallel seitlich von außen von dem zu melkenden Tier T von links und von rechts zwischen den Hinterbeinen HB und Vorderbeinen VB des zu melkenden Tiers T an den Zitzen 18a des Euters 18 ansetzen. Ein solcher Ansetzvorgang ist im Vergleich zu einem Ansetzvorgang für vier Zitzenbecher 5a von einer Seite her doppelt so schnell.

Die Basisarme 14, 14' mit den Händen 15, 15' greifen vorzugsweise von seitlich außen von dem zu melkenden Tier T die Zitzenbecher 5a aus dem Platzteiler 4 unterhalb der Reinigungseinrichtung 17 und setzen diese an die Zitzen 18a an. Das hat den Vorteil, dass die Zitzenbecher 5a in einem vor Kot geschützten Bereich unter das zu melkende Tier T geführt werden. Außerdem ist die Bewegungsfreiheit der Basisarme 14, 14' mit den Händen 15, 15' größer als wenn sie durch die Hinterbeine HB in Längsrichtung des zu melkenden Tiers T geführt würden, was aus Platzgründen problematisch ist.

Die Zitzenbecher 5a können einzeln oder auch zu zweit ergriffen werden. In Figur 9 sind zwei gleichzeitig ergriffene Zitzenbecher 5a beispielhaft gezeigt.

Antriebe der Basisarme 14, 14' sind in der Roboterbasis 13 angeordnet. Die Hände 15, 15' können über Parallelführungen verschwenkt werden oder sind einzeln unabhängig bewegbar. Eine Steuerung des Außenroboters 12 kann in der Roboterbasis 13 angeordnet sein und kommuniziert mit der Steuerung der Melkstandanordnung 1. Selbstverständlich sind entsprechende Sensoren angeordnet, welche eine exakte Positionierung eines jeden Außenroboters 12 an der Melkplattform 1a bzw. an einem jeweiligen Melkstand 3 unterstützen.

Die Erfindung ist nicht auf die oben dargestellten Ausführungsbeispiele beschränkt sondern im Rahmen der beigefügten Ansprüche modifizierbar.

So ist es z.B. denkbar, dass bei dem zweiten Ausführungsbeispiels der erfindungsgemäßen Melkstandanordnung 1' nach Figur 2 mehrere Reihen der nebeneinander angeordneten Melkstände 3 hintereinander oder sogar auch übereinander in mehreren Etagen angeordnet sein können.

In einer weiteren Ausführung kann jeder Melkstand 3 mit einem Außenroboter 12 versehen sein.

Der Positionssensor 16 kann in einer Erweiterung z.B. auch Bilder über den Zustand des Euters des zu melkenden Tieres liefern und somit zur Kenntnis des Gesundheitszustandes des zu melkenden Tieres beitragen.

Jeder Melkstand 3 kann für sich aktiviert oder gesperrt werden. Auch bei gesperrten Melkständen 3 kann die Melkstandanordnung 1 weiter betrieben werden, z.B. ist ein Anhalten des Melkkarussells nicht erforderlich.

Jeder Melkstand 3 kann für ein Tier individuell vorbereitet werden, z.B. unterschiedliche vordefinierte Vorpositionen des Melkzeugs 5 mit der Armeinrichtung 6, oder auch individuelle Verschiebung des Platzteilers 4 in der Längsachse zur Findung der günstigsten Melk- und Auslassposition für das jeweilige Tier. Bei der semi-automatischen Version kann die Vorposition des Melkzeugs 5 an das zu erwartende Tier in dem jeweiligen Melkstand 3 automatisch angepasst werden, wenn eine Erkennungseinrichtung (z.B. RFID) das jeweilige Tier erkennt, das den Melkstand 3 betritt. Außerdem kann es bei erkanntem Tier möglich sein, dass eine Vorpositionierung der Zitzenbecher 5a angepasst an die Eutermaße des erkannten Tieres vorgenommen werden kann.

Außerdem kann jeder Melkstand 3 eine Futtereinrichtung besitzen.

Das Melkzeug kann natürlich auch für milchgebende Tiere mit Eutern, die eine unterschiedliche Anzahl von Zitzen, z.B. 2, 3 oder 4, haben, verwendet werden.

Bei der Melkstandanordnung 1' nach Figur 4 kann anstelle des Melkers M ein Außenroboter 12 angesetzt werden, der einen Melkstand 3 nach dem anderen bedient.

Die Melkstandanordnung 1 als Melkkarussell kann so ausgebildet sein, dass auch mehrere 360° Drehungen für einen Melkvorgang eines bestimmten Tieres erfolgen können, wenn dies notwendig wird. Dann wird ein Auslass des Tieres aus dem Melkstand 3 verhindert, wenn dieser am Ausgang 8 ankommt.

### Bezugszeichen

- 1, 1', 1": Melkstandanordnung
- 1a: Melkplattform
- 2: Drehpunkt
- 3: Melkstand
- 3a, 3b: Tor
- 4: Platzteiler
- 4a, 4b: Pfosten
- 4c: Horizontalstange
- 4d: Verkleidung
- 4e, 4'e: Aufnahme
- 5, 5': Melkzeug
- 5a: Zitzenbecher
- 6, 6': Armeinrichtung
- 7: Zugang
- 8: Ausgang
- 9: Antriebseinheit
- 10: Oberarm
- 10a: Halter
- 11: Unterarm
- 11a, 11'a: Melkzeugträger
- 12: Außenroboter
- 13: Roboterbasis
- 13a, 13'a: Basisgelenk
- 14, 14': Basisarm
- 14a, 14'a: Handgelenk
- 15, 15': Hand
- 15a, 15'a: Greifabschnitt
- 16: Positionssensor
- 17: Reinigungseinrichtung
- 17a: Reinigungsdüse
- 18: Euter
- 18a: Zitze
- α: Ansetzbereich
- β: Mittelpunktswinkel
- AE: Außenende
- AR: Außenraum
- G: Grube
- KE: Kopfende
- HB: Hinterbein
- IR: Innenraum
- LA: Längsachse
- M: Melker
- MZ: Melkerzugriff
- T: Tier
- TK: Tierkopf
- VB: Vorderbein

## Patentansprüche

1. Melkstandanordnung (1, 1', 1") zum Melken von milchgebenden Tieren, mit mindestens einem Platzteiler (4), welcher an einer Längsseite des Melkstands (3) angeordnet ist und eine Armeinrichtung (6) mit einem Melkzeug (5, 5') aufweist, die aus einer Parkposition in eine Arbeitsposition und zurück verstellbar ist, wobei die Armeinrichtung (6) mit dem Melkzeug (5, 5') in der Parkposition in dem Platzteiler (4) angeordnet ist, wobei das Melkzeug (5, 5') aus der Parkposition von der Seite her in die Arbeitsposition in dem Melkstand derart verstellbar ist, dass es seitlich zu einem zu melkenden Tier (T) zwischen dessen Vorder- und Hinterbeine in die Arbeitsposition verstellbar ist, und wobei das Melkzeug (5, 5') aus zwei Hälften besteht, wobei jede Hälfte einen spezifischen Satz von mindestens einem Zitzenbecher (5a) aufweist, wobei mindestens ein Außenroboter (12) vorgesehen ist, welcher zum Ansetzen des Melkzeugs (5, 5') aus der Parkposition an die Zitzen (18a) des Euters (18) eines zu melkende Tieres (T) ausgebildet ist, **dadurch gekennzeichnet, dass** der mindestens eine Außenroboter (12) zwei Basisarme (14, 14') mit jeweils mindestens einer Hand (15, 15') aufweist, wobei sich die Basisarme (14, 14') und die Hände (15, 15') gegenüberstehen, wobei der mindestens eine Außenroboter (12) zum parallelen Ansetzen von mindestens einem Zitzenbecher (5a) pro Seite an Zitzen (18a) eines Euters (18) des zu melkenden Tieres (T) ausgebildet ist.

2. Melkstandanordnung (1, 1', 1") nach Anspruch 1, **gekennzeichnet durch** ein Melkkarussell.

3. Melkstandanordnung (1, 1', 1") nach Anspruch 2, **dadurch gekennzeichnet, dass** das Melkkarussell ein Außenmelkkarussell ist.

4. Melkstandanordnung (1, 1', 1") nach einem der vorhergehenden Ansprüche, **dadurch gekennzeichnet, dass** die jeweilige mindestens eine Hand (15, 15') mit mindestens einem Greifabschnitt (15a, 15'a) zum Ergreifen jeweils mindestens eines Zitzenbechers (5a) jeweils einer Hälfte der Melkzeuge (5, 5') in der Parkposition in einem jeweiligen Platzteiler (4) an einer jeweiligen Längsseite des Melkstands (1, 1', 1") links und rechts von einem zu melkenden Tier (T) ausgebildet ist.

5. Melkstandanordnung (1, 1', 1") nach einem der vorhergehenden Ansprüche, **dadurch gekennzeichnet, dass** mindestens eine Hand (15, 15') des mindestens einen Außenroboters (12) mit mindestens einem Positionssensor (16) versehen ist.

6. Melkstandanordnung (1, 1', 1") nach Anspruch 1, **dadurch gekennzeichnet, dass** die Armeinrichtung (6) das Melkzeug (5, 5') in der Parkposition in dem Platzteiler (4) hält.

7. Melkstandanordnung (1, 1', 1") nach Anspruch 6, **dadurch gekennzeichnet, dass** die Armeinrichtung (6) einen Oberarm (10) und einen damit gekoppelten Unterarm (11) aufweist, wobei der Oberarm als Halter (10a) ausgebildet ist und der Unterarm (11) einen Melkzeugträger (11a) bildet.

8. Melkstandanordnung (1, 1', 1") nach einem der Ansprüche 6 oder 7, **dadurch gekennzeichnet, dass** die Armeinrichtung (6) mit dem Melkzeug (5, 5') in der Parkposition in dem Platzteiler (4) in Öffnungen (4e, 4'e) einer Verkleidung (4d) des Platzteilers (4) angeordnet ist.

9. Melkstandanordnung (1, 1', 1") nach Anspruch 8 **dadurch gekennzeichnet, dass** die Öffnungen (4e, 4'e) der Verkleidung (4d) des Platzteilers (4) mit der darin in der Parkposition angeordneten Armeinrichtung (6) mit dem Melkzeug (5, 5') mit einer Schutzabdeckung verschließbar sind.

10. Melkstandanordnung (1, 1', 1") nach Anspruch 8 oder 9, **dadurch gekennzeichnet, dass** in dem Platzteiler (4) eine Reinigungseinrichtung (17) für das Melkzeug (5, 5') angeordnet ist.

11. Melkstandanordnung (1, 1', 1") nach Anspruch 10, **dadurch gekennzeichnet, dass** die Armeinrichtung (6) mit einem Vertikalantrieb verbunden ist, welcher zur vertikalen Verstellung des Melkzeugs (5, 5') für Reinigungsvorgänge in Zusammenwirkung mit der Reinigungseinrichtung (17) vorgesehen ist.

12. Melkstandanordnung (1, 1', 1") nach einem der Ansprüche 6 bis 11, **dadurch gekennzeichnet, dass** der Platzteiler (4) mit seinen Komponenten eine vormontierte komplette Einheit bildet.

## Claims

1. A milking parlor arrangement (1, 1', 1'') for milking milk-producing animals, said milking parlor arrangement having at least one space divider (4), wherein the space divider (4) is arranged approximately parallel to a longitudinal axis of the animal to be milked (T), said space divider comprising an arm device (6) with a milking cluster (5, 5') which is adjustable out of a park position into an operating position and back, wherein the arm device (6) with the milking cluster (5, 5') is arranged in the space divider (4) in the park position, wherein the milking cluster (5, 5') is adjustable into the operating position laterally with respect to the animal (T) to be milked between the front and hind legs thereof, and wherein the milking cluster (5, 5') consists of two halves, wherein each half comprises a specific set of at least one teat cup (5a), wherein at least one external robot (12) is provided which is realized for positioning the milking cluster (5, 5') from the park position onto the teats (18a) of the udder (18) of an animal (T) to be milked, **characterized in that** the at least one external robot (12) comprises two base arms (14, 14') in each case with at least one hand (15, 15'), wherein the base arms (14, 14') and the hands (15, 15') are opposite one another, wherein the at least one external robot (12) is realized for the parallel positioning of at least one teat cup (5a) per side on teats (18a) of an udder (18) of the animal (T) to be milked.

2. The milking parlor arrangement (1, 1', 1'') according to claim 1, **characterized by** a rotary milking parlor.

3. The milking parlor arrangement (1, 1', 1'') according to claim 2, **characterized in that** the rotary milking parlor is an external rotary milking parlor.

4. The milking parlor arrangement (1, 1', 1'') according to any of the preceding claims, **characterized in that** the respective at least one hand (15, 15') is realized with at least one gripping portion (15a, 15'a) for taking hold in each case of at least one teat cup (5a) in each case of one half of the milking cluster (5, 5') in the park position in a respective space divider (4) to the left and right of an animal (T) to be milked.

5. The milking parlor arrangement (1, 1', 1'') according to any of the preceding claims, **characterized in that** at least one hand (15, 15') of the at least one external robot (12) is provided with at least one positioning sensor (16).

6. The milking parlor arrangement (1, 1', 1'') according to claim 1, **characterized in that** the arm device (6) holds the milking cluster (5, 5') in the space divider (4) in the park position.

7. The milking parlor arrangement (1, 1', 1'') according to claim 6, **characterized in that** the arm device (6) comprises an upper arm (10) and a lower arm (11) which is coupled therewith, wherein the upper arm is realized as a holder (10a) and the lower arm (11) forms a milk cluster carrier (11a).

8. The milking parlor arrangement (1, 1', 1'') according to claim 6 or 7, **characterized in that** the arm device (6) with the milking cluster (5, 5') is arranged in the space divider (4) in the park position in openings (4e, 4'e) of a cladding (4d) of the space divider (4).

9. The milking parlor arrangement (1, 1', 1'') according to claim 8, **characterized in that** the openings (4e, 4'e) of the cladding (4d) of the space divider (4) with the arm device (6) with the milking cluster (5, 5') arranged therein in the park position are closable by way of a protective covering.

10. The milking parlor arrangement (1, 1', 1'') according to claim 8 or 9, **characterized in that** a cleaning device (17) for the milking cluster (5, 5') is arranged in the space divider (4).

11. The milking parlor arrangement (1, 1', 1'') according to claim 10, **characterized in that** the arm device (6) is connected to a vertical drive which is provided for the vertical adjustment of the milking cluster (5, 5') for cleaning operations in cooperation with the cleaning device (17) .

12. The milking parlor arrangement (1, 1', 1'') according to one of claims 6 to 11, **characterized in that** the space divider (4) with its components forms a complete premounted unit.

## Revendications

1. Agencement de station de traite (1, 1', 1") permettant de traire des animaux producteurs de lait comportant au moins une cloison de séparation (4) qui est montée sur un côté longitudinal de la station de traite (3), et comporte un dispositif à bras (6) équipé d'un appareil de traite (5, 5') qui peut être déplacé entre une position de repos et une position de travail, dans la position de repos le dispositif à bras (6) équipé de l'appareil de traite (5, 5') étant situé dans la cloison de séparation (4), l'appareil de traite (5, 5') pouvant être déplacé latéralement de la position de repos, à la position de travail, dans la station de traite de façon à pouvoir être déplacé vers un animal à traire (T), entre ses pattes avant et ses pattes arrières dans la position de travail, et l'appareil de traite (5, 5') étant constitué de deux moitiés, chaque moitié comportant un jeu spécifique d'au moins un gobelet trayeur (5a), au moins un robot externe (12) étant prévu, ce robot étant réalisé pour positionner l'appareil de traite (5, 5') à partir de la position de repos sur les trayons (18a) de la mamelle (18) d'un animal à traire (T),
**caractérisé en ce que**
le robot externe (12) comporte deux bras de base (14, 14') ayant chacun au moins une manette (15, 15'), les bras de base (14, 14') et les manettes (15, 15') étant opposés, le robot externe (12) étant réalisé pour permettre le positionnement parallèle d'au moins un gobelet trayeur (5a) par côté sur les trayons (18a) d'une mamelle (18) de l'animal (T) à traire.

2. Agencement d'une station de traite (1, 1', 1") conforme à la revendication 1,
**caractérisé par**
un carrousel de traite.

3. Agencement d'une station de traite (1, 1', 1") conforme à la revendication 2,
**caractérisé en ce que**
le carrousel de traite est un carrousel de traite externe.

4. Agencement d'une station de traite (1, 1', 1") conforme à l'une des revendications précédentes,
**caractérisé en ce que**
chaque manette (15, 15') comporte au moins un segment de préhension (15a, 15'a) pour permettre de saisir respectivement au moins un gobelet trayeur (5a) d'au moins une moitié de l'outil de traite (5, 5') situé dans la position de repos, dans une cloison de séparation (4) sur un côté longitudinal respectif de la station de traite (1, 1', 1"), à gauche et à droite d'un animal (T) à traire.

5. Agencement d'une station de traite (1, 1', 1") conforme à l'une des revendications précédentes,
**caractérisé en ce qu'**
au moins une manette (15, 15') du robot externe (12) est équipé d'au moins un capteur de position (16).

6. Agencement d'une station de traite (1, 1', 1") conforme à la revendication 1,
**caractérisé en ce que**
le dispositif à bras (6) maintient l'appareil de traite (5, 5') en position de repos dans la cloison de séparation (4).

7. Agencement d'une station de traite (1, 1', 1") conforme à la revendication 6,
**caractérisé en ce que**
le dispositif à bras (6) comporte un bras supérieur (10) et un bras inférieur (11) couplé à celui-ci, le bras supérieur étant réalisé sous la forme d'un élément de retenue (10a) et le bras inférieur (11) formant un support de l'appareil de traite (11a).

8. Agencement d'une station de traite (1, 1', 1") conforme à l'une des revendications 6 et 7,
**caractérisé en ce que**
le dispositif à bras (6) équipé de l'appareil de traite (5, 5') est situé, dans la position de repos dans la cloison de séparation (4) dans des ouvertures (4e, 4'e) d'un revêtement (4d) de cette cloison (4).

9. Agencement d'une station de traite (1, 1', 1") conforme à la revendication 8,
**caractérisé en ce que**
les ouvertures (4e, 4'e) du revêtement (4d) de la cloison de séparation (4) munies du dispositif à bras (6) équipé de l'appareil de traite (5, 5') situé dans la position de repos peuvent être fermées par un recouvrement de protection.

10. Agencement d'une station de traite (1, 1', 1") conforme à la revendication 8 ou 9,
**caractérisé en ce qu'**
un dispositif de nettoyage (17) de l'appareil de traite (5, 5') est monté dans la cloison de séparation (4).

11. Agencement d'une station de traite (1, 1', 1") conforme à la revendication 10,
**caractérisé en ce que**
le dispositif à bras (6) est relié à un entraînement vertical qui est prévu pour permettre un déplacement vertical de l'appareil de traite (5, 5') pour des processus de nettoyage en coopération avec le dispositif de nettoyage (17).

12. Agencement d'une station de traite (1, 1', 1") conforme à l'une des revendications 6 à 11,
**caractérisé en ce que**
la cloison de séparation (4) forme avec ses composants une unité complète prémontée.
